# FASCICULE DE BREVET EUROPEEN

(11) **EP 2 713 097 B1**
(45) Date de publication et mention de la délivrance du brevet: **12.08.2015**
(21) Numéro de dépôt: 13186808.5
(22) Date de dépôt: 01.10.2013
(51) Int. Cl.: F21V 8/00, F21S 8/10, G02B 6/00

(54) **Guide de lumière à profil courbe avec zone à dioptres de correction**
Lichtwellenleiter mit gekrümmtem Profil mit Korrekturdiopterzone
Light guide with curved profile having an area with correction dioptres

(30) Priorité: 01.10.2012 FR 1259255
(43) Date de publication de la demande: 02.04.2014
(73) Titulaire: VALEO VISION, 93012 Bobigny Cedex (FR)
(72) Inventeur: Germon, François, 49250 FONTAINE GUERIN (FR)

(56) Documents cités:
- EP-A1- 1 881 263
- EP-A1- 2 317 214

## Description

L'invention a trait à un guide de lumière généralement allongé et étendu, plus particulièrement à un guide de lumière généralement allongé et étendu présentant une courbure. L'invention a trait également à un dispositif d'éclairage et/ou de signalisation notamment pour véhicule automobile, comprenant ledit guide de lumière.

Dans le domaine de l'éclairage et de la signalisation de véhicules automobiles, il est de plus en plus fréquent d'utiliser des guides de lumière ou guides optiques. Un guide optique est, très schématiquement, un élément allongé en matière transparente. Il peut présenter une section généralement circulaire. Les rayons lumineux y entrent habituellement par une des extrémités et se propagent par réflexion totale dans la longueur du guide en direction de son extrémité opposée. Une partie des rayons peut sortir via des zones prismatiques à sa surface extérieure. Un guide optique peut également présenter une section essentiellement plate ou étendue, typiquement proche d'une forme rectangulaire. Ce type de guides est couramment désigné nappe de guidage ou encore guide plat. Dans ce type de guide optique, les rayons lumineux peuvent être collimatés dans l'épaisseur du guide et se propager par transmission sans réflexion jusqu'à une face de sortie ou jusqu'à une face de réflexion puis une face de sortie. Les guides optiques peuvent émettre de la lumière sur toute leur longueur. Ils présentent également l'avantage de pouvoir prendre des formes géométriques très variées, être rectilignes ou en arc de cercle, et amener une surface éclairante même dans des zones peu accessibles du projecteur ou du feu du véhicule. Ils participent ainsi fortement au style du projecteur ou du feu.

Le document de brevet FR 2 904 093 A1 a trait à un dispositif d'éclairage ou de signalisation notamment pour véhicule automobile, comprenant une nappe de guidage galbée. La nappe de guidage forme une portion de calotte sphérique et comprend une série de sources lumineuses disposées dans des orifices disposés le long de sa circonférence. Elle comprend une face arrière de réflexion à profil parabolique et une face avant de sortie des rayons. Les rayons lumineux émis par les sources lumineuses se propagent ainsi le long du guide par réflexions successives sur ses surfaces de guidage selon le principe de réflexion totale lorsque l'angle d'incidence est supérieur à un angle limite. Lorsque les rayons rencontrent la surface arrière, ils sont réfléchis vers l'avant du guide et se propagent jusqu'à la surface avant de sortie pour ensuite sortir du guide et former un faisceau d'éclairage ou de signalisation. La face de sortie est généralement planaire avec un profil général en arc de cercle.

Le document de brevet FR 2 941 785 A1 a trait également à un dispositif d'éclairage ou de signalisation notamment pour véhicule automobile, comprenant une nappe de guidage galbée. La face avant de sortie de la nappe présente une forme non planaire et la face arrière de réflexion est dimensionnée pour réfléchir les rayons de manière adéquate vers la face de sortie. Tout comme dans l'enseignement discuté précédemment, les rayons lumineux émis par les sources lumineuses se propagent le long du guide par réflexions successives sur ses surfaces de guidage selon le principe de réflexion totale lorsque l'angle d'incidence est supérieur à un angle limite.

Le document de brevet FR 2 943 118 A1 a trait à un dispositif d'éclairage ou de signalisation notamment pour véhicule automobile, comprenant une nappe de guidage. Plus particulièrement, cet enseignement a trait à un dispositif de couplage de la nappe de guidage. Ce dispositif de couplage est en fait une portion de la nappe destinée à assurer le couplage entre une source lumineuse et la nappe. Il comprend essentiellement une surface de réflexion à forme complexe disposée sur la surface de guidage qui est opposée à la source lumineuse. Cette surface de réflexion est configurée pour réfléchir une première partie des rayons émis par la source lumineuse, et ce directement vers la face avant du guide et une deuxième partie vers la face arrière de réflexion. La première partie des rayons correspond à un secteur réduit, typiquement inférieur ou égal à 20° alors que la deuxième partie des rayons couvre habituellement un secteur de plus de 180°. Le coupleur est configuré pour que les rayons se propageant dans la nappe soient essentiellement collimatés dans son l'épaisseur. En cas de courbure importante de la nappe, certains des rayons provenant du coupleur et dirigés vers la face arrière de réflexion peuvent rencontrer l'une des surfaces de guidage de la nappe avant de rencontrer la face de réflexion. Compte tenu de l'angle d'incidence important, ces rayons vont être réfléchis et leur trajectoire va être modifiée. Il en résulte alors une perte de qualité du faisceau émis par une diminution de son homogénéité. Cette situation est particulièrement pénalisante pour les guides présentant une face arrière de réflexion configurée pour assurer une réflexion des rayons par le principe de réflexion totale. Une telle face arrière peut présenter deux faces inclinées formant une pointe. Les rayons la rencontrant peuvent ainsi être réfléchis naturellement sans qu'une métallisation de la face en question soit nécessaire. Si certains des rayons destinés à rencontrer la face de sortie avec un angle d'incidence supérieur à l'angle limite de réfraction rencontrent une des surfaces de guidage du guide, ils risquent de rencontrer la face de sortie avec un angle inférieur à l'angle limite de réfraction et ainsi de sortir du guide.

L'invention a pour objectif de proposer une solution au problème de réflexion de rayons lumineux sur au moins une des surfaces de guidage d'un guide de lumière. Plus particulièrement, l'invention a pour objectif de proposer une solution au problème de réflexion de rayons lumineux sur au moins une des surfaces de guidage d'une nappe de guidage de lumière.

L'invention a pour objet un guide de lumière avec un corps généralement allongé en matériau transparent d'un premier indice de réfraction n₁, comprenant: une zone de couplage apte à faire rentrer des rayons lumineux dans le corps de manière à ce qu'ils puissent s'y propager selon une ou plusieurs directions comprises dans l'épaisseur du corps jusqu'à atteindre une ou plusieurs faces de sortie ou de réflexion du corps; remarquable en ce que le corps comprend à une portion courbée du dit corps, entre la zone de couplage et la ou au moins une des faces de sortie ou de réflexion du corps, une zone de correction d'un deuxième indice de réfraction n₂ différent du premier, ladite zone formant deux dioptres avec le matériau du reste du corps, au moins un des dioptres étant configuré pour réfracter les rayons lumineux provenant de la zone de couplage de manière à ce qu'ils puissent atteindre la ou au moins une des faces de sortie ou de réflexion malgré la courbure du corps, et en ce que au moins un des deux dioptres (16, 18 ; 116 ; 118 ; 216, 218), préférentiellement le premier dioptre (18 ; 118 ; 218) rencontré par les rayons provenant de la zone de couplage (6 ; 106 ; 206), est configuré pour dévier les rayons dans le même sens que la courbure du corps.

Le guide de lumière peut être une nappe, c'est-à-dire de section généralement étendue avec deux surfaces de guidage généralement parallèles l'une à l'autre. Selon un mode avantageux de l'invention, le deuxième indice de réfraction n₂ est inférieur au premier indice de réfraction n₁, préférentiellement inférieur à 95%, plus préférentiellement 90%, encore plus préférentiellement 85% du premier indice de réfraction.

Selon un autre mode avantageux de l'invention, la zone de correction s'étend sur au moins une partie de l'épaisseur du corps, préférentiellement sur au moins 50% de l'épaisseur du corps.

Selon un encore autre mode avantageux de l'invention, la zone de correction est constituée d'air dans une cavité du corps. Alternativement elle peut également être constituée d'un autre matériau transparent.

Selon un encore autre mode avantageux de l'invention, un des deux dioptres, préférentiellement le second dioptre rencontré par les rayons provenant de la zone de couplage, est configuré pour au moins essentiellement ne pas dévier les rayons le traversant.

Selon un encore autre mode avantageux de l'invention, les dioptres s'étendent entre les faces de guidage définissant l'épaisseur du guide essentiellement transversalement, préférentiellement au moins essentiellement perpendiculairement, aux rayons provenant de la zone de couplage qui les rencontrent.

Selon un encore autre mode avantageux de l'invention, la section de la zone de correction est variable en fonction de son éloignement de la ou des faces de sortie ou de réflexion du corps suivant les rayons traversant ladite section.

Selon un encore autre mode avantageux de l'invention, la zone de correction est de section prismatique.

Selon un encore autre mode avantageux de l'invention, la zone de couplage est au moins partiellement généralement circulaire avec un centre et située au niveau d'une des faces étendues du corps, la zone de correction s'étendant au moins essentiellement suivant un arc de cercle centrée sur ledit centre.

Selon un encore autre mode avantageux de l'invention, le corps comprend au moins une face de réflexion des rayons provenant de la zone de couplage, ladite ou lesdites faces de réflexion formant une courbe préférentiellement parabolique.

Selon un encore autre mode avantageux de l'invention, la section de la zone de correction, préférentiellement l'inclinaison et la position d'au moins un des deux dioptres, est fonction de l'éloignement de la ou des faces de réflexion suivant les rayons traversant la zone.

Selon un encore autre mode avantageux de l'invention, la distance entre la zone de correction et le centre de la zone de couplage est inférieure à 50%, préférentiellement 40%, plus préférentiellement 30% de la distance moyenne entre ledit centre et la ou les faces de sortie ou de réflexion du corps calculée sur le secteur des rayons sur lequel la zone de correction est active.

L'invention a également pour objet un dispositif d'éclairage et/ou de signalisation comprenant un guide de lumière, **caractérisé en ce que** le guide de lumière est conforme à l'invention.

Les mesures de l'invention permettent par des moyens simples et économiques de corriger localement un guide de lumière en raison d'un profil non rectiligne de ce dernier. Les surfaces formant les dioptres de la zone de correction sont faciles à calculer par application de la loi de la réfraction de Snell-Descartes. L'invention permet par conséquent de prévoir des profils courbes pour des guides de lumière sans pour autant occasionner des pertes de qualité ou d'homogénéité d'éclairage.

D'autres caractéristiques et avantages de la présente invention seront mieux compris à l'aide de la description et des dessins parmi lesquels :
- la figure 1 est une vue en coupe d'un premier guide de lumière selon un premier mode de réalisation de l'invention ;
- la figure 2 est une vue en élévation d'un deuxième guide de lumière selon un deuxième mode de réalisation de l'invention ;
- la figure 3 est une vue en coupe selon l'axe 3-3 d'une portion du guide de lumière illustré à la figure 2 ;
- la figure 4 est une vue en élévation d'une portion du guide de lumière de la figure 2 ;
- la figure 5 est une vue en élévation d'une portion de guide de lumière selon un troisième mode de réalisation de l'invention.

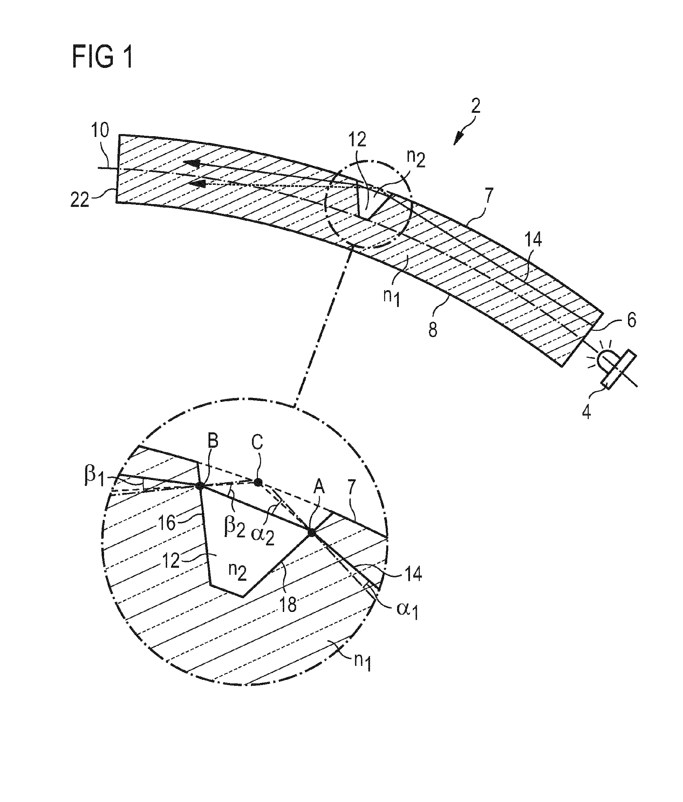

La figure 1 est une vue en coupe d'un guide de lumière selon un premier mode de réalisation de l'invention. Le guide de lumière 2 est en matériau transparent d'un indice de réfraction n₁. Il s'étend longitudinalement selon une direction longitudinale 10 et comprend deux surfaces de guidage 7 et 8 qui sont au moins essentiellement parallèles l'une à l'autre. Sa section transversale peut être notamment rectangulaire ou carrée. Il comprend une face d'entrée 6 apte à collimater les rayons lumineux dans au moins une direction et devant laquelle est disposée une source lumineuse 4, telle qu'à incandescence ou une diode à électroluminescence (LED). Il comprend également une face de sortie 22 à l'autre extrémité opposée du guide. Le guide de lumière présente un profil, selon une coupe longitudinale, qui est généralement courbe.

Le guide de lumière 2 comprend une zone de correction 12 d'un indice de réfraction n₂ différent de l'indice de réfraction n₁ du matériau transparent du guide 2. En l'occurrence la zone de correction est une zone d'air d'un indice de réfraction proche de 1, par essence différent et inférieur à l'indice de réfraction de tout matériau transparent tel que par exemple du polycarbonate (de l'ordre de 1.591) ou du verre (de l'ordre de 1.5). La zone de correction 12 est située à une partie extérieure de l'épaisseur du guide par rapport à sa courbure et forme deux dioptres 16 et 18, un dioptre étant une surface séparant deux milieux transparents d'indices de réfraction différents

Un rayon 14 se propageant le long du guide est illustré. Il provient de la source lumineuse 4 et pénètre dans le guide 2 par sa face d'entrée 6 servant de zone de couplage optique entre la source lumineuse et le guide. Il se propage exclusivement par transmission depuis la face d'entrée 6 jusqu'à la zone de correction 12 du guide de lumière 2. Il rencontre le premier dioptre 18 de la zone de correction 12 au point A avec un angle d'incidence α₁. Il est réfracté par le dioptre et se propage alors dans la zone d'indice de réfraction n₂ suivant un angle α₂ par rapport à la perpendiculaire au dioptre. Les angles α₁ et α₂ obéissent à loi de Snell-Descartes *n*₁ sin α₁ = *n*₂ sin α₂. Le rayon ainsi dévié se propage depuis le point de rencontre A avec le premier dioptre 18 jusqu'au point de rencontre B avec le deuxième dioptre 16. Ce rayon forme un angle d'incidence β₂ avec le deuxième dioptre 16 et est ainsi à nouveau réfracté à son passage de manière à former dans le matériau transparent du guide un angle ß₁ dans la perpendiculaire au deuxième dioptre 16 au point de passage B, les angles ß₂ et ß₁ obéissant également à la loi de Snell-Descartes sus mentionnée. Le rayon est ainsi réfracté deux fois par les premier et deuxième dioptres de manière à ce que sa trajectoire soit corrigée dans le même sens que la courbure du guide. Le rayon sortant de la zone de correction peut alors continuer à sa propager dans le long du guide de lumière suivant une trajectoire contrôlée et sans avoir subi de réflexion sur une surface de guidage du guide.

Le premier dioptre 18 est configuré pour que le rayon 14 qui le rencontre forme un angle d'incidence supérieur à zéro, le rayon incident étant du côté de la perpendiculaire au dioptre, qui est opposé à la concavité du profil courbe du guide. Cela permet alors au rayon d'être réfracté suivant un angle (en l'occurrence α₂) qui est supérieur à l'angle d'incidence (en l'occurrence α₁) grâce à l'indice de réfraction n₂ de la zone de correction qui est inférieur à l'indice de réfraction n₁ du matériau transparent du guide.

Le deuxième dioptre 16 peut mais ne doit pas nécessairement dévier le rayon 14. En effet, dans le cas de l'illustration de la figure 1, le rayon est dévié une deuxième fois par le deuxième dioptre 16. Il est toutefois envisageable de prévoir le deuxième dioptre perpendiculaire au rayon traversant la zone de correction, de manière à ne pas le dévier lors de son passage au travers du dioptre.

A la figure 1, est illustrée en trait pointillé dans la zone de correction, la trajectoire qu'emprunterait le rayon 14 en l'absence de cette zone de correction. Le rayon rencontrerait la surface de guidage supérieure 7 du guide 2 en un point C situé dans la zone de correction. Compte tenu de son angle d'incidence supérieur à l'angle d'incidence limite de réfraction du dioptre formé par le matériau transparent du guide et l'air ambiant, ce rayon serait alors réfléchi sur base du principe de réflexion totale et se propagerait dans le guide suivant une inclinaison inadéquate.

La zone de correction peut prendre bien sûr diverses formes. Elle peut s'étendre sur toute l'épaisseur du guide ou uniquement sur une partie en fonction notamment du profil courbe du guide ainsi que de la destination voulue pour les rayons.

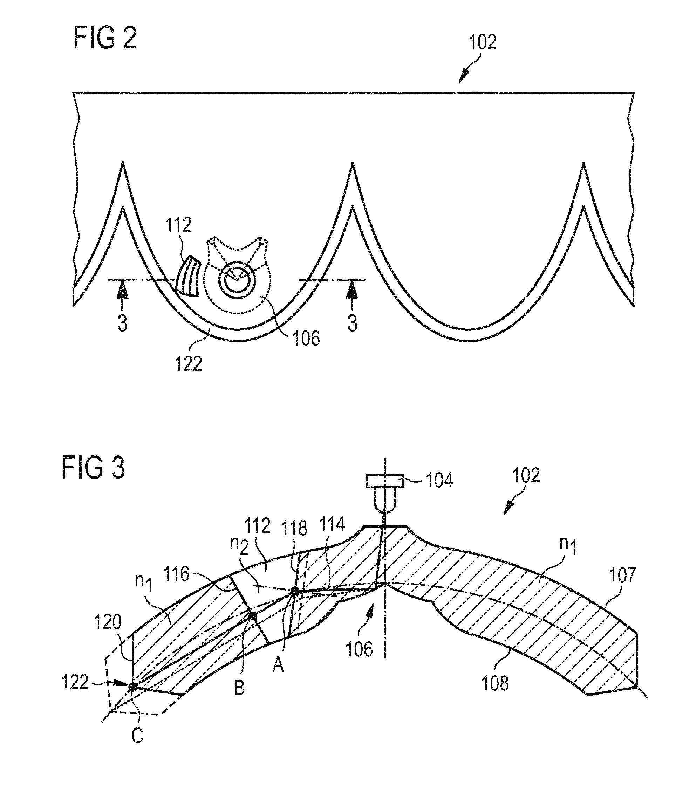

La figure 2 est une vue en élévation d'un autre guide de lumière selon un deuxième mode de réalisation de l'invention. Les signes de référence, sous forme de nombres, du premier mode de réalisation sont utilisés dans ce deuxième mode de réalisation pour les éléments de même fonction ou similaires, ces nombres étant toutefois majorés de 100 afin de bien distinguer les différents modes de réalisation de l'invention. Le guide de lumière 102 est du type nappe de guidage avec deux surfaces de guidage au moins essentiellement parallèles et s'étendant suivant une direction principale (correspondant à une horizontale passant sur le guide à la figure 2). La nappe de guidage 102 comprend une face de sortie correspondant au bord supérieur à la figure 2, et une face de réflexion 122 correspondant au bord inférieure à la figure 2. La face arrière de réflexion comprend une série de profils paraboliques bien connus en soi de l'homme de métier, chacun de ces profils étant destiné à réfléchir vers la face de sortie les rayons provenant d'une source lumineuse spécifique. A la figure 2, une seule des portions paraboliques est détaillée, étant entendu que les autres portions peuvent être similaires. Une zone de couplage 106 est prévue à une position du profil parabolique correspondant essentiellement à un foyer de la parabole. Cette zone de couplage est destinée à transmettre les rayons d'une source lumineuse (non représentée) dans l'épaisseur de la nappe. Plus précisément les rayons sont émis par la source essentiellement perpendiculairement au plan moyen de la nappe et rentre dans l'épaisseur de la nappe avec ou sans réfraction. La zone de couplage comprend une surface de réflexion sur la face opposée à celle de la source lumineuse. Elle est illustrée en trait pointillé à la figure 2. Elle permet aux rayons pénétrant la nappe essentiellement perpendiculairement au plan moyen de la nappe d'être réfléchis selon des directions essentiellement parallèles au plan moyen de la nappe. La forme complexe de la zone de couplage 106 illustrée à la figure 2 permet de réfléchir une partie des rayons vers la face de sortie, et ce sur un secteur réduit (par exemple inférieure à 20°), et une autre partie des rayons vers la face de réflexion 122, et ce sur un secteur nettement supérieur (par exemple supérieur à 180° et dirigé vers l'arrière). Les deux cercles en trait plein à la zone de couplage de la figure 2 correspondent à une surépaisseur circulaire de matière de la nappe, servant de face d'entrée pour les rayons provenant de la source lumineuse. Une zone de correction 112 est illustrée sur le côté droit de la zone de couplage 106. Les zones de couplage et de correction sont davantage détaillées en relation avec la figure 3.

La figure 3 est une vue en coupe selon l'axe 3-3 d'une portion du guide de lumière illustré à la figure 2. On peut observer que la nappe présente un profil longitudinal courbe. La zone de couplage 106 avec sa surface de réflexion y est bien visible. Les rayons émis par la source lumineuse 104 pénètrent la partie centrale de la nappe au droit de la source lumineuse. Ils sont ensuite réfléchis essentiellement transversalement par la surface complexe sur la face inférieure 108 de la nappe. Un tel rayon 114 est illustré sur la figure. Ce rayon pénètre la nappe et est réfléchi par la surface de réflexion de la zone de couplage 106 essentiellement radialement jusqu'à ce qu'il rencontre le premier dioptre 118 de la zone de correction 112. Similairement au mode de réalisation de la figure 1, le rayon 114 est réfracté dans le sens de la courbure de la nappe de manière à corriger sa trajectoire. Il n'est pas dévié par le deuxième dioptre 116 en raison d'un angle d'incidence essentiellement nul. Similairement au premier mode de réalisation à la figure 1, la zone de correction est constituée d'une cavité remplie d'air ambiant. Le premier dioptre 118 est suffisamment incliné pour que le rayon 114 lui soit incident d'un côté opposé à la concavité du profil courbe de la nappe, de manière à ce que le sens de la réfraction réalisée par le dioptre oriente le rayon vers le reste de la nappe (cible C).

La face de réflexion 122 de la nappe 102 présente une section avec deux faces 120 en pointe. L'objectif de cette configuration est d'avoir un angle d'incidence supérieur à l'angle limite de réfraction et d'avoir ainsi un phénomène de réflexion totale en l'absence de revêtement réfléchissant sur la face de réflexion 122.

En trait pointillé à la figure 3 sont illustrés le profil du premier dioptre à distance du plan de la coupe 3-3, le profil de la nappe et de sa face de sortie ainsi que la trajectoire d'un rayon correspondant.

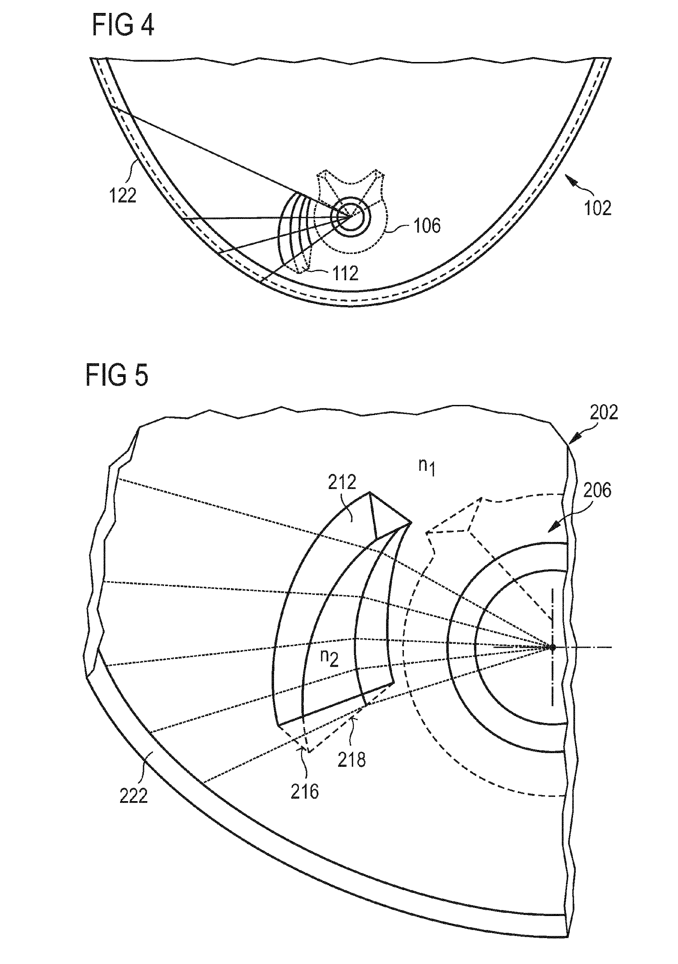

La figure 4 est une vue agrandie d'une portion de la nappe, comprenant la zone de couplage, la zone de correction 106 et la face de réflexion 122. La zone de correction 106 forme un creux ou une rainure à profil courbé et de section variable. En effet, cette zone est amenée à corriger différemment les rayons en fonction du chemin ou plutôt de la longueur du chemin qu'ils doivent suivre jusqu'à atteindre la face de réflexion 122. Quatre rayons partant de la zone de couplage 106 et orientés vers différentes portions de la face de réflexion sont illustrés.

La figure 5 est une illustration d'une portion de guide de lumière selon un troisième mode de réalisation de l'invention. Ce mode de réalisation est similaire au deuxième mode de réalisation des figures 2 à 4, à cette différence près que la zone de correction 212 est de section prismatique évolutive. Cette forme plus complexe permet une correction plus précise.

## Revendications

1. Guide de lumière (2 ; 102 ; 202) avec un corps généralement allongé en matériau transparent d'un premier indice de réfraction n₁, comprenant :
une zone de couplage (6 ; 106 ; 206) apte à faire rentrer des rayons lumineux dans le corps de manière à ce qu'ils puissent s'y propager selon une ou plusieurs directions comprises dans l'épaisseur du corps jusqu'à atteindre une ou plusieurs faces de sortie ou de réflexion (22 ; 122 ; 222) du corps ;
**caractérisé en ce que**
le corps comprend à une portion courbée du dit corps, entre la zone de couplage (6 ; 106 ; 206) et la ou au moins une des faces de sortie ou de réflexion (22 ; 122 ; 222) du corps, une zone de correction (12 ; 112 ; 212) d'un deuxième indice de réfraction n₂ différent du premier, ladite zone formant deux dioptres (16, 18 ; 116 ; 118 ; 216, 218) avec le matériau du reste du corps, au moins un des dioptres étant configuré pour réfracter les rayons lumineux provenant de la zone de couplage (6 ; 106 ; 206) de manière à ce qu'ils puissent atteindre la ou au moins une des faces de sortie ou de réflexion (22 ; 122 ; 222) malgré la courbure du corps,
et **en ce que** au moins un des deux dioptres (16, 18 ; 116 ; 118 ; 216, 218), préférentiellement le premier dioptre (18 ; 118 ; 218) rencontré par les rayons provenant de la zone de couplage (6 ; 106 ; 206), est configuré pour dévier les rayons dans le même sens que la courbure du corps.

2. Guide de lumière (2 ; 102 ; 202) selon la revendication 1, **caractérisé en ce que** le deuxième indice de réfraction n₂ est inférieur au premier indice de réfraction n₁, préférentiellement inférieur à 95%, plus préférentiellement 90%, encore plus préférentiellement 85% du premier indice de réfraction n₁.

3. Guide de lumière (2 ; 102 ; 202) selon l'une des revendications 1 et 2, **caractérisé en ce que** la zone de correction (12 ; 112 ; 212) s'étend sur au moins une partie de l'épaisseur du corps, préférentiellement sur au moins 50% de l'épaisseur du corps.

4. Guide de lumière selon l'une des revendications 1 à 3, **caractérisé en ce que** la zone de correction (12 ; 112 ; 212) est constituée d'air dans une cavité du corps.

5. Guide de lumière (2 ; 102 ; 202) selon l'une des revendications 1 à 4, **caractérisé en ce qu'**un des deux dioptres (16, 18 ; 116 ; 118 ; 216, 218), préférentiellement le second dioptre (16 ; 116 ; 216) rencontré par les rayons provenant de la zone de couplage (6 ; 106 ; 206), est configuré pour au moins essentiellement ne pas dévier les rayons le traversant.

6. Guide de lumière (2 ; 102 ; 202) selon l'une des revendications 1 à 5, **caractérisé en ce que** les dioptres (16, 18 ; 116 ; 118 ; 216, 218) s'étendent entre les faces de guidage définissant l'épaisseur du guide essentiellement transversalement, préférentiellement au moins essentiellement perpendiculairement, aux rayons provenant de la zone de couplage qui les rencontrent.

7. Guide de lumière (2 ; 102 ; 202) selon la revendication 6, **caractérisé en ce que** la section de la zone de correction (12 ; 112 ; 212) est variable en fonction de son éloignement de la ou des faces de sortie ou de réflexion (22 ; 122 ; 222) du corps suivant les rayons traversant ladite section.

8. Guide de lumière (2 ; 102 ; 202) selon l'une des revendications 1 à 7, **caractérisé en ce que** la zone de correction est de section prismatique.

9. Guide de lumière (2 ; 102 ; 202) selon l'une des revendications 1 à 8, **caractérisé en ce que** la zone de couplage (6 ; 106 ; 206) est au moins partiellement généralement circulaire avec un centre et située au niveau d'une des faces étendues du corps, la zone de correction s'étendant au moins essentiellement suivant un arc de cercle centrée sur ledit centre.

10. Guide de lumière (102 ; 202) selon la revendication 9, **caractérisé en ce que** le corps comprend au moins une face de réflexion (122 ; 222) des rayons provenant de la zone de couplage, ladite ou lesdites faces de réflexion (122 ; 222) formant une courbe préférentiellement parabolique.

11. Guide de lumière (102 ; 202) selon la revendication 10, **caractérisé en ce que** la section de la zone de correction (112 ; 212), préférentiellement l'inclinaison et la position d'au moins un des deux dioptres (116 ; 118 ; 216, 218), est fonction de l'éloignement de la ou des faces de réflexion (122 ; 222) suivant les rayons traversant la zone.

12. Guide de lumière (102 ; 202) selon l'une des revendications 9 à 11, **caractérisé en ce que** la distance entre la zone de correction (112 ; 212) et le centre de la zone de couplage (106 ; 206) est inférieure à 50%, préférentiellement 40%, plus préférentiellement 30% de la distance moyenne entre ledit centre et la ou les faces de réflexion (122 ; 222) du corps calculée sur le secteur des rayons sur lequel la zone de correction est active.

13. Dispositif d'éclairage et/ou de signalisation comprenant un guide de lumière, **caractérisé en ce que** le guide de lumière (2 ; 102 ; 202) est conforme à l'une des revendications 1 à 12.

## Patentansprüche

1. Lichtleiter (2; 102; 202) mit einem allgemein länglichen Körper aus lichtdurchlässigem Material mit einer ersten Brechzahl n₁, umfassend
einen Einkopplungsbereich (6; 106; 206), der Lichtstrahlen in den Körper solchermaßen eintreten lässt, dass diese sich in einer oder mehreren Richtungen innerhalb der Dicke des Körpers soweit auszubreiten vermögen, bis sie zu einer oder mehreren Austritts- oder Reflexionsflächen (22; 122; 222) des Körpers gelangen;
**dadurch gekennzeichnet, dass** der Körper in einem gekrümmten Abschnitt des Körpers zwischen dem Einkopplungsbereich (6; 106; 206) und der oder wenigstens einer der Austritts- oder Reflexionsflächen (22; 122; 222) des Körpers einen Korrekturbereich (12; 112; 212) mit einer zweiten Brechzahl n₂ umfasst, die sich von der ersten unterscheidet, wobei der Bereich mit dem Material des übrigen Körpers zwei Diopter (16, 18; 116, 118; 216, 218) bildet, wobei wenigstens einer der Diopter dazu ausgebildet ist, die vom Einkopplungsbereich (6; 106; 206) stammenden Lichtstrahlen solchermaßen zu brechen, dass diese trotz der Krümmung des Körpers bis zu der oder wenigstens einer der Austritts- oder Reflexionsflächen (22; 122; 222) gelangen können,
und dass wenigstens einer der beiden Diopter (16, 18; 116, 118; 216, 218), vorzugsweise der erste Diopter (18; 118; 218), auf den die vom Einkopplungsbereich (6; 106; 206) stammenden Lichtstrahlen treffen, dazu ausgebildet ist, die Lichtstrahlen in dieselbe Richtung wie die Krümmung des Körpers abzulenken.

2. Lichtleiter (2; 102; 202) nach Anspruch 1,
**dadurch gekennzeichnet, dass** die zweite Brechzahl n₂ kleiner ist als die erste Brechzahl n₁, vorzugsweise kleiner als 95 %, besonders bevorzugt 90 %, ganz besonders bevorzugt 85 % der ersten Brechzahl n₁ beträgt.

3. Lichtleiter (2; 102; 202) nach einem der Ansprüche 1 oder 2,
**dadurch gekennzeichnet, dass** der Korrekturbereich (12; 112; 212) sich über wenigstens einen Teil der Dicke des Körpers erstreckt, vorzugsweise über wenigstens 50 % der Körperdicke.

4. Lichtleiter nach einem der Ansprüche 1 bis 3,
**dadurch gekennzeichnet, dass** der Korrekturbereich (12; 112; 212) aus Luft in einer Höhlung des Körpers gebildet ist.

5. Lichtleiter (2; 102; 202) nach einem der Ansprüche 1 bis 4,
**dadurch gekennzeichnet, dass** einer der beiden Diopter (16, 18; 116, 118; 216, 218), vorzugsweise der zweite Diopter (16; 116; 216), auf den die vom Einkopplungsbereich (6; 106; 206) stammenden Lichtstrahlen treffen, dazu ausgebildet ist, die ihn durchquerenden Lichtstrahlen wenigstens im Wesentlichen nicht abzulenken.

6. Lichtleiter (2; 102; 202) nach einem der Ansprüche 1 bis 5,
**dadurch gekennzeichnet, dass** sich die Diopter (16, 18; 116, 118; 216, 218) zwischen den die Dicke des Lichtleiters definierenden Leitflächen im Wesentlichen quer, vorzugsweise wenigstens im Wesentlichen senkrecht zu den vom Einkopplungsbereich stammenden Lichtstrahlen erstrecken, auf die diese treffen.

7. Lichtleiter (2; 102; 202) nach Anspruch 6,
**dadurch gekennzeichnet, dass** der Querschnitt des Korrekturbereichs (12; 1112, 212) abhängig von seiner Entfernung zu der oder den Austritts- oder Reflexionsflächen (22; 122; 222) des Körpers entsprechend der diesen Querschnitt durchquerenden Lichtstrahlen variabel ist.

8. Lichtleiter (2; 102; 202) nach einem der Ansprüche 1 bis 7,
**dadurch gekennzeichnet, dass** der Korrekturbereich einen prismatischen Querschnitt hat.

9. Lichtleiter (2; 102; 202) nach einem der Ansprüche 1 bis 8,
**dadurch gekennzeichnet, dass** der Einkopplungsbereich (6; 106; 206) wenigstens teilweise allgemein kreisförmig mit einem Mittelpunkt ist und an einer der langgestreckten Flächen des Körpers liegt, wobei sich der Korrekturbereich wenigstens im Wesentlichen entlang eines auf diesen Mittelpunkt zentrierten Kreisbogens erstreckt.

10. Lichtleiter (2; 102; 202) nach Anspruch 9,
**dadurch gekennzeichnet, dass** der Körper wenigstens eine Fläche (122; 222) zur Reflexion der vom Einkopplungsbereich stammenden Lichtstrahlen umfasst, wobei die Reflexionsfläche(n) (122; 222) eine vorzugsweise parabolische Kurve bildet bzw. bilden.

11. Lichtleiter (2; 102; 202) nach Anspruch 10,
**dadurch gekennzeichnet, dass** der Querschnitt des Korrekturbereichs (112; 212), vorzugsweise die Neigung und die Lage wenigstens einer der beiden Diopter (116, 118; 216, 218), von der Entfernung der Reflexionsfläche(n) (122; 222) entsprechend der diesen Bereich durchquerenden Strahlen abhängt.

12. Lichtleiter (2; 102; 202) nach einem der Ansprüche 9 bis 11,
**dadurch gekennzeichnet, dass** der Abstand zwischen dem Korrekturbereich (112; 212) und der Mitte des Einkopplungsbereichs (106; 206) kleiner als 50 %, vorzugsweise kleiner als 40 %, besonders bevorzugt kleiner als 30 % des durchschnittlichen Abstands zwischen der Mitte und der bzw. den Reflexionsflächen (122; 222) des Körpers ist, berechnet über den Lichtstrahlensektor, in dem der Korrekturbereich aktiv ist.

13. Beleuchtungs- und/oder Signalgebungsvorrichtung mit einem Lichtleiter, **dadurch gekennzeichnet, dass** der Lichtleiter (2; 102; 202) einem der Ansprüche 1 bis 12 entspricht.

## Claims

1. Light guide (2; 102; 202) with a generally elongate body made of transparent material with a first refraction index n₁, comprising:
a coupling area (6; 106; 206) which can make rays of light return to the body such that they can be propagated there according to one or a plurality of directions contained in the thickness of the body, until one or a plurality of output or reflection faces (22; 122; 222) of the body is reached;
**characterised in that**
at a curved portion of the said body, between the coupling area (6; 106; 206) and the or at least one of the output or reflections faces (22; 122; 222) of the body, the body comprises an area of correction (12; 112; 212) of a second refraction index n₂ which is different from the first one, the said area forming two dioptres (16, 18; 116; 118; 216, 218) with the material of the remainder of the body, at least one of the dioptres being configured to refract the rays of light obtained from the coupling area (6; 106; 206), such that they can reach the or at least one of the output or reflection faces (22; 122; 222) despite the curvature of the body,
and **in that** at least one of the two dioptres (16, 18; 116; 118; 216, 218), and preferably the first dioptre (18; 118; 218) encountered by the rays derived from the coupling area (6; 106; 206) is configured to deflect the rays in the same direction as the curvature of the body.

2. Light guide (2; 102; 202) according to claim 1, **characterised in that** the second refraction index n₂ is smaller than the first refraction index n₁, preferably less than 95%, more preferably less than 90%, and still more preferably less than 85% of the first refraction index n₁.

3. Light guide (2; 102; 202) according to one of claims 1 and 2, **characterised in that** the area of correction (12; 112; 212) extends over at least part of the thickness of the body, and preferably over at least 50% of the thickness of the body.

4. Light guide according to one of claims 1 to 3, **characterised in that** the area of correction (12; 112; 212) consists of air in a cavity in the body.

5. Light guide (2; 102; 202) according to one of claims 1 to 4, **characterised in that** one of the two dioptres (16, 18; 116; 118; 216, 218), and preferably the second dioptre (16; 116; 216) encountered by the rays derived from the coupling area (6; 106; 206) is configured to at least substantially not deflect the rays which pass through it.

6. Light guide (2; 102; 202) according to one of claims 1 to 5, **characterised in that** the dioptres (16, 18; 116; 118; 216, 218) extend between the guide faces which define the thickness of the guide substantially transversely, and preferably at least substantially perpendicularly, to the rays derived from the coupling area which meets them.

7. Light guide (2; 102; 202) according to claim 6, **characterised in that** the cross-section of the area of correction (12; 112; 212) is variable according to its distance from the output or reflection face(s) (22; 122; 222) of the body, according to the rays which pass through the said cross-section.

8. Light guide (2; 102; 202) according to one of claims 1 to 7, **characterised in that** the area of correction has a prismatic cross-section.

9. Light guide (2; 102; 202) according to one of claims 1 to 8, **characterised in that** the coupling area (6; 106; 206) is at least partly generally circular with a centre and is situated at the level of one of the extended faces of the body, with the area of correction extending at least substantially according to an arc of a circle centred on the said centre.

10. Light guide (102; 202) according to claim 9, **characterised in that** the body comprises at least one face (122; 222) for reflection of the rays derived from the coupling area, with the said reflection face(s) (122; 222) forming a preferably parabolic curve.

11. Light guide (102; 202) according to claim 10, **characterised in that** the cross-section of the area of correction (112; 212), and preferably the inclination and the position of at least one of the two dioptres (116; 118; 216, 218) depends on the distance of the reflection face(s) (122; 222) according to the rays which pass through the area.

12. Light guide (102; 202) according to one of claims 9 to 11, **characterised in that** the distance between the area of correction (112; 212) and the centre of the coupling area (106; 206) is less than 50%, preferably less than 40%, and more preferably less than 30% of the mean distance between the said centre and the reflection face(s) (122; 222) of the body calculated on the sector of the rays on which the area of correction is active.

13. Lighting and/or signalling device comprising a light guide, **characterised in that** the light guide (2; 102; 202) is in conformity with one of claims 1 to 12.
